# EUROPEAN PATENT APPLICATION

(11) **EP 3 462 284 A1**
(43) Date of publication of application: **03.04.2019**
(21) Application number: 17913946.4
(22) Date of filing: 12.06.2017
(51) Int. Cl.: G06F 3/01, G06F 3/147, G06K 3/00, G06K 9/00

(54) **CONTROL METHOD, CONTROLLER, INTELLIGENT MIRROR AND COMPUTER READABLE STORAGE MEDIUM**

(71) Applicant: Midea Group Co., Ltd., Foshan, Guangdong 528311 (CN)
(72) Inventor: YU, Dahai, Shenzhen Guangdong 518057 (CN); QUAN, Yongbing, Foshan Guangdong 528311 (CN); LI, Jianping, Foshan Guangdong 528311 (CN); ZHOU, Junyang, Shenzhen Guangdong 518057 (CN); SONG, Jianfeng, Foshan Guangdong 528311 (CN)
(74) Representative: Lam, Alvin
(86) International application number: PCT/CN2017/087979
(87) International publication number: WO 2018/227349

(57) **Abstract**

Embodiments of the present disclosure provide a control method, configured to control a smart mirror (100). The smart mirror (100) comprises a camera (20). The control method comprises: controlling the camera (20) to capture a current user; determining whether the current user is a registered user; controlling the current user to log in to the smart mirror (100) when the current user is a registered user; controlling the smart mirror (100) to generate interaction with the current user and output interactive information according to an input of the current user. Embodiments of the present disclosure also provide a controller (10), a smart mirror (100) and a computer readable storage medium.

## Description

### FIELD

The present disclosure relates to smart mirror field, and more particularly, to a control method, a controller, a smart mirror and a computer readable storage medium.

### BACKGROUND

At present, a smart mirror is mainly configured to display information, for example, display weather, short messages, and the like. However, the use functions of the smart mirror are limited and user experience is poor.

### SUMMARY

Embodiments of the present disclosure aim to solve at least one of the technical solutions in the related art. For this, embodiments of the present disclosure provide a control method, a controller, a smart mirror and a computer readable storage medium.

The control method of embodiments of the present disclosure is configured to control a smart mirror. The smart mirror comprises a camera, and the control method comprises:
controlling the camera to capture a current user;
determining whether the current user is a registered user;
controlling the current user to log in to the smart mirror when the current user is a registered user; and
controlling the smart mirror to generate interaction with the current user and output interactive information according to an input of the current user.

The controller of embodiments of the present disclosure is configured to control a smart mirror. The smart mirror comprises a camera. The controller comprises a control device, a determining device, a login device and an interactive device. The control device is configured to control the camera to capture a current user; the determining device is configured to determine whether the current user is a registered user; the login device is configured to control the current user to log in to the smart mirror when the current user is a registered user; the interactive device is configured to control the smart mirror to generate interaction with the current user and output interactive information according to an input of the current user.

The smart mirror of embodiments of the present disclosure comprises a camera and a controller described above, in which the controller is electrically connected with the camera.

The smart mirror of embodiments of the present disclosure comprises one or more processors, a memory, and one or more programs. The one or more programs are stored in the memory and are configured to be executed by the one or more processors, and comprises instructions for executing the control method described above.

The computer readable storage medium of embodiments of the present disclosure comprises a computer program configured to be used in combination with an electronic device capable of displaying frames. The computer program can be executed by a processor to implement the control method described above.

The control method, controller, smart mirror and computer readable storage medium of embodiments of the present disclosure can provide the user with a variety of interactive functions comprising beauty makeup and cartoon image rendering after the user log in to the smart mirror. In this way, the use functions of the smart mirror can be further enriched to meet users' demands for smart life and improve user experience.

Additional aspects and advantages of embodiments of present disclosure will be given in part in the following descriptions, become apparent in part from the following descriptions, or be learned from the practice of embodiments of the present disclosure.

### BRIEF DESCRIPTION OF THE DRAWINGS

The above and/or additional aspects and advantages of the present disclosure will become apparent and more readily appreciated from the following descriptions made with reference to the drawings, in which:
Fig. 1 is a flow chart illustrating a control method according to an embodiment of the present disclosure.
Fig. 2 is a block diagram illustrating a smart mirror according to an embodiment of the present disclosure.
Fig. 3 is a schematic diagram illustrating a smart mirror according to an embodiment of the present disclosure.
Fig. 4 is a flow chart illustrating a control method according to an embodiment of the present disclosure.
Fig. 5 is a block diagram illustrating a determining device according to an embodiment of the present disclosure.
Fig. 6 is a flow chart illustrating a control method according to an embodiment of the present disclosure.
Fig. 7 is a block diagram illustrating a controller according to an embodiment of the present disclosure.
Fig. 8 is a flow chart illustrating a control method according to an embodiment of the present disclosure.
Fig. 9 is a flow chart illustrating a control method according to an embodiment of the present disclosure.
Fig. 10 is a block diagram illustrating an interactive device according to an embodiment of the present disclosure.
Fig. 11 is a schematic diagram illustrating a state in a control method according to an embodiment of the present disclosure.
Fig. 12 is a flow chart illustrating a control method according to an embodiment of the present disclosure.
Fig. 13 is a schematic diagram illustrating a state in a control method according to an embodiment of the present disclosure.
Fig. 14 is a flow chart illustrating a control method according to an embodiment of the present disclosure.
Fig. 15 is a schematic diagram illustrating a state in a control method according to an embodiment of the present disclosure.
Fig. 16 is a flow chart illustrating a control method according to an embodiment of the present disclosure.
Fig. 17 is a schematic diagram illustrating a state in a control method according to an embodiment of the present disclosure.
Fig. 18 is a flow chart illustrating a control method according to an embodiment of the present disclosure.
Fig. 19 is a block diagram illustrating an interactive device according to an embodiment of the present disclosure.
Fig. 20 is a schematic diagram illustrating a state in a control method according to an embodiment of the present disclosure.
Fig. 21 is a flow chart illustrating a control method according to an embodiment of the present disclosure.
Fig. 22 is a schematic diagram illustrating a state in a control method according to another embodiment of the present disclosure.
Fig. 23 is a flow chart illustrating a control method according to an embodiment of the present disclosure.
Fig. 24 is a schematic diagram illustrating a state in a control method according to an embodiment of the present disclosure.

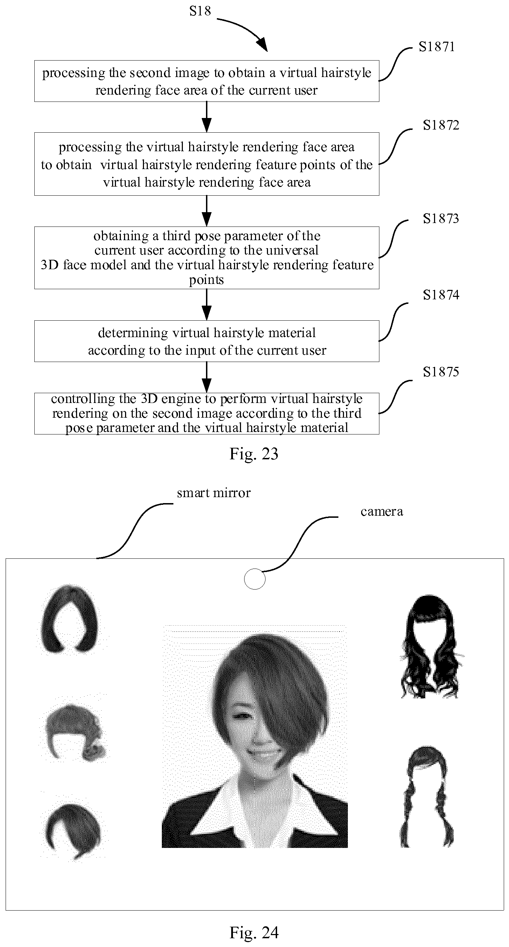

Fig. 23 is a flow chart illustrating a control method according to an embodiment of the present disclosure.

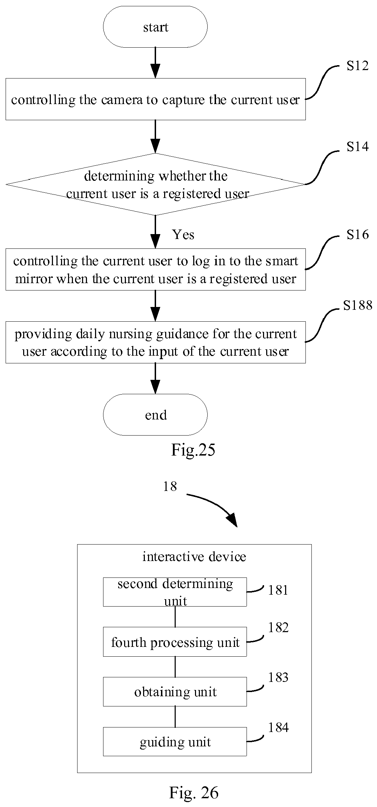

Fig. 26 is a block diagram illustrating an interactive device according to an embodiment of the present disclosure.

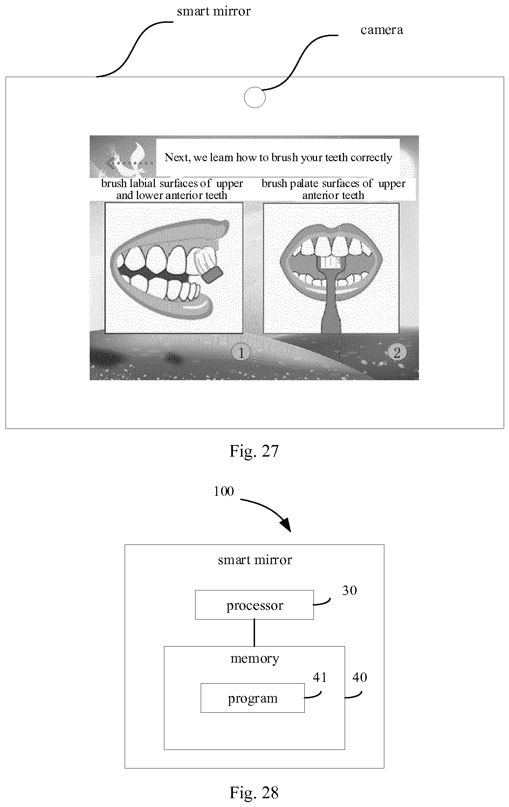

Fig. 27 is a schematic diagram illustrating a state in a control method according to an embodiment of the present disclosure.
Fig. 28 is a block diagram illustrating a smart mirror according to an embodiment of the present disclosure.

### DETAILED DESCRIPTION

Embodiments of the present disclosure will be described in detail and examples of embodiments are illustrated in the drawings. The same or similar elements and the elements having the same or similar functions are denoted by like reference numerals throughout the descriptions. Embodiments described herein with reference to drawings are explanatory, serve to explain the present disclosure, and are not construed to limit embodiments of the present disclosure.

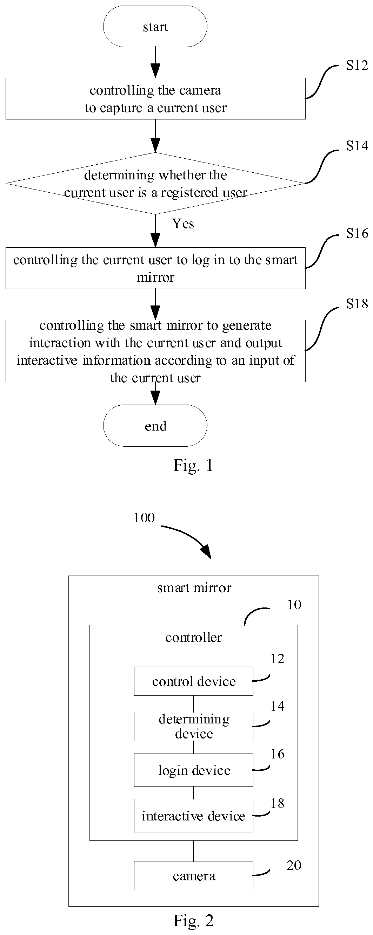

Referring to Fig. 1 to 3, the control method of embodiments of the present disclosure is configured to control the smart mirror 100. The smart mirror 100 comprises a camera 20. The control method comprises:
S12, controlling the camera to capture a current user;
S14, determining whether the current user is a registered user;
S16, controlling the current user to log in to the smart mirror 100 when the current user is a registered user; and
S18, controlling the smart mirror to generate interaction with the current user and output interactive information according to an input of the current user.

Referring to Fig. 2, the control method of embodiments of the present disclosure can be implemented by the controller 10 of embodiments of the present disclosure. The controller 10 of embodiments of the present disclosure comprises a control device 12, a determining device 14, a login device 16 and an interactive device 18. Step S12 may be implemented by the control device 12, step S14 may be implemented by the determining device 14, step S16 may be implemented by the login device 16, and step S18 may be implemented by the interactive device 18.

That is, the control device 12 is configured to control the camera to capture the current user; the determining device 14 is configured to determine whether the current user is a registered user; the login device 16 is configured to control the current user to log in to the smart mirror 100 when the current user is a registered user; the interactive device 18 is configured to control the smart mirror to generate interaction with the current user and output interactive information according to the input of the current user.

The controller 10 of embodiments of the present disclosure is applied to the smart mirror 100 of embodiments of the present disclosure. That is, the smart mirror 100 of embodiments of the present disclosure comprises the controller 10 of embodiments of the present disclosure. The smart mirror 100 of embodiments of the present disclosure further comprises the camera 20, in which, the camera 20 is electrically connected with the controller 10.

At present, the majority of smart mirrors 10 can merely display weather or short messages, with few interactive functions with users. The functions of the smart mirror 100 are relatively limited, with a relatively poor user experience.

The control method of embodiments of the present disclosure can provide users with a variety of entertainment interaction and guidance functions after the users successfully log in, such as beauty makeup and cartoon image rendering, etc.

Specifically, the current user of the smart mirror 100 needs to log in to the smart mirror 100 successfully to exercise his right to use a variety of entertainment interaction and guidance functions of the smart mirror 100. That is, the entertainment interaction and guidance functions of the smart mirror 100 can be used only when the current user is a registered user. In this way, the personal data and privacy of registered users can be protected, and the information security of using the smart mirror 100 can be improved. In addition, each registered user can set a different style of the smart mirror 100, so that the smart mirror 100 will display the corresponding style of the current registered user after the registered user logs in to the smart mirror 100, further improving the user experience.

After the current user successfully logs in to the smart mirror 100, the smart mirror 100 will display the interface of interactive functions. The current user can interact with the smart mirror 100 by clicking on the content on the interface.

In conclusion, the control method, the controller 10 and the smart mirror 100 of embodiments of the present disclosure can provide users with a variety of interactive functions after the users successfully log in. In this way, the use functions of the smart mirror 100 can be further enriched to meet users' demands for smart life and improve user experience.

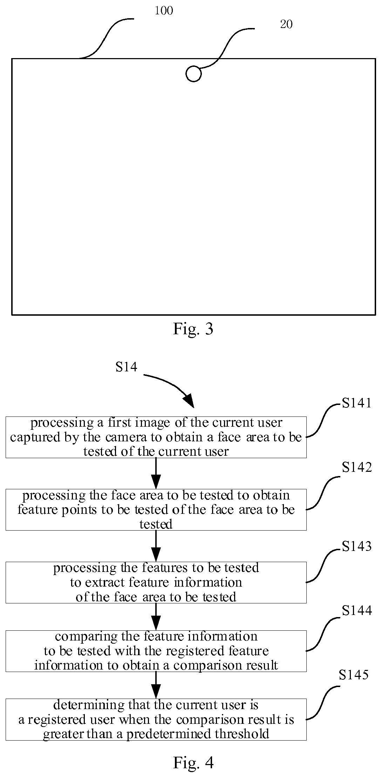

Referring to Figs. 2 and 4, in some embodiments, the smart mirror 100 comprises a registry. The registry comprises registered feature information of registered face areas of all registered users. Step S14 of determining whether the current user is a registered user comprises:
S141, processing a first image of the current user captured by the camera 20 to obtain a face area to be tested of the current user;
S142, processing the face area to be tested to obtain feature points to be tested of the face area to be tested;
S143, processing the feature points to be tested to extract feature information of the face area to be tested;
S144, comparing the feature information to be tested with the registered feature information to obtain a comparison result;
S145, determining that the current user is a registered user when the comparison result is greater than a predetermined threshold.

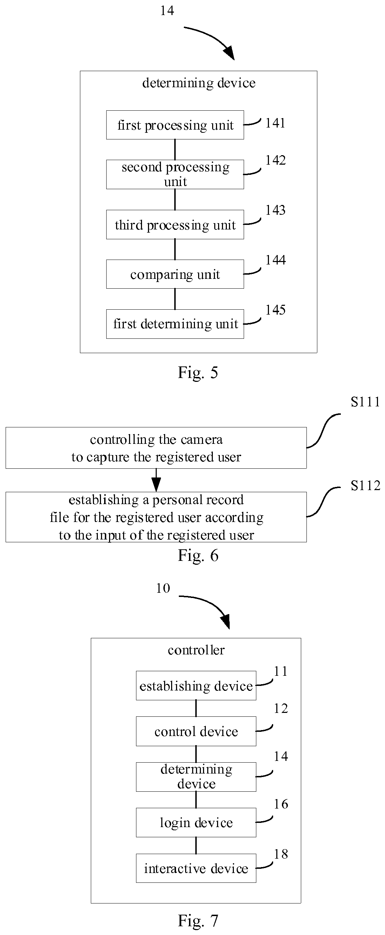

Referring to Fig. 5, in some embodiments, the determining device 14 comprises a first processing unit 141, a second processing unit 142, a third processing unit 143, a comparing unit 144 and a first determining unit 145. Step S141 may be implemented by the first processing unit 141, step S142 may be implemented by the second processing unit 142, step S143 may be implemented by the third processing unit 143, step S144 may be implemented by the comparing unit 144, and step S145 may be implemented by the first determining unit 145.

In other words, the first processing unit 141 is configured to process the first image of the current user captured by the camera 20 to obtain the face area to be tested of the current user. The second processing unit 142 is configured to process the face area to be tested to obtain the feature points to be tested of the face area to be tested. The third processing unit 143 is configured to process the feature points to be tested to extract the feature information of the face area to be tested. The comparing unit 144 is configured to compare the feature information to be tested with the registered feature information to obtain the comparison result. The first determining unit 145 is configured to determine that the current user is a registered user when the comparison result is greater than the predetermined threshold.

Specifically, the feature points to be tested comprise the eyes, nose, mouth, facial contour and other feature points in the face area to be tested. The registered feature information or the feature information to be tested comprises the feature information of the face of the registered user or the current user, such as the relative position and distance of the eyes, nose and mouth, and viewpoint and size of eyes, nose and mouth. By comparing the feature information of the current user to be tested with the registered feature information of the registered user, when the comparison result is greater than the predetermined threshold, it indicates that the current user has a higher matching degree with the registered user's face, so that the current user can be determined as a registered user. After determining that the current user is a registered user, the current user successfully logs in to the smart mirror 100.

In this way, the smart mirror 100 only provides rich use functions for registered users, ensuring the information security of registered users.

In some embodiments, registered users can set the use style of the smart mirror 100 by themselves, such as the color of the interface, background pattern and so on. In this way, after the current user successfully logs in to the smart mirror 100, the smart mirror 100 can display the style the current user likes, improving the user experience.

In embodiments of the present disclosure, the login verification of the current user is implemented by face recognition. In other embodiments, the login verification of the current user may also be implemented by means of speech recognition, fingerprint recognition, iris recognition, and the like.

Referring to Figs. 2 and 6 together, in some embodiments, the control method of embodiments of the present disclosure further comprises:
Sill, controlling the camera 20 to capture the registered user; and
S112, establishing a personal record file of the registered user according to the input of the registered user.

Referring to Fig. 7, in some embodiments, the controller 10 further comprises an establishing device 11. Step S111 may be implemented by the control device 12, and step S112 may be implemented by the establishing device 11.

That is, the control device 12 is further configured to control the camera 20 to capture the registered user; the establishing device 12 is configured to establish the personal record file of the registered user according to the input of the registered user.

Specifically, after the camera 20 captures the registered user, the smart mirror 100 processes the image of the registered user to obtain the registered feature points of the registered user, and stores the registered feature points in the registry for subsequent identification, matching and login. The registered user can create his own personal record file by editing input on the smart mirror 100. The personal record file comprises the registered user's nickname, head portrait, personal signature and so on. The registered user can also create his own cartoon image and store it in the personal record file. After the current user is determined as a registered user, i.e., after the current user successfully logs in to the smart mirror 100, the smart mirror 100 will display all or part of the information in the current user's personal record file.

It should be noted that, after the current user generates interaction with the smart mirror 100, the current user can choose to save the outputted interactive information. At this point, the saved interactive information is also stored in the personal record file. The user can view his saved interactive information and/or historical interactive content through the personal record file. In this way, user experience can be further improved.

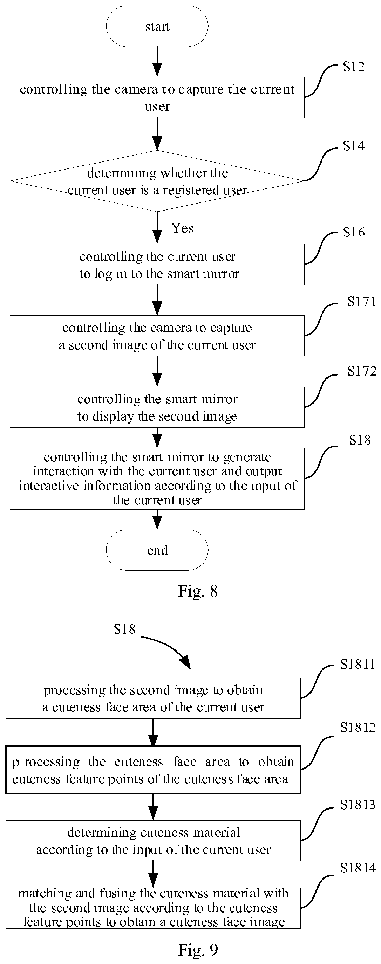

Referring to Figs. 2 and 8 together, in some embodiments, the control method of embodiments of the present disclosure comprises:
S171, controlling the camera 20 to capture the second image of the current user; and
S172, controlling the smart mirror 100 to display the second image.

Referring to Fig. 2 again, in some embodiments, steps S171 and S172 may be implemented by the control device 12.

That is, the control device 12 is further configured to:
control the camera 20 to capture the second image of the current user; and
control the smart mirror 100 to display the second image.

Thus, the first image captured by the camera 20 is used for face recognition of the login verification. The second image captured by the camera 20 is used for the current user's interaction with the smart mirror 100.

Referring to Fig. 9, in some embodiments, the interaction comprises a cuteness processing on the second image. The smart mirror comprises a cuteness material library. Step S18 of controlling the smart mirror 100 to generate interaction with the current user and output interactive information according to the input of the current user comprises:
S1811, processing the second image to obtain a cuteness face area of the current user;
S1812, processing the cuteness face area to obtain cuteness feature points of the cuteness face area;
S1813, determining cuteness material according to the input of the current user; and
S1814, matching and fusing the cuteness material with the second image according to the cuteness feature points to obtain a cuteness image.

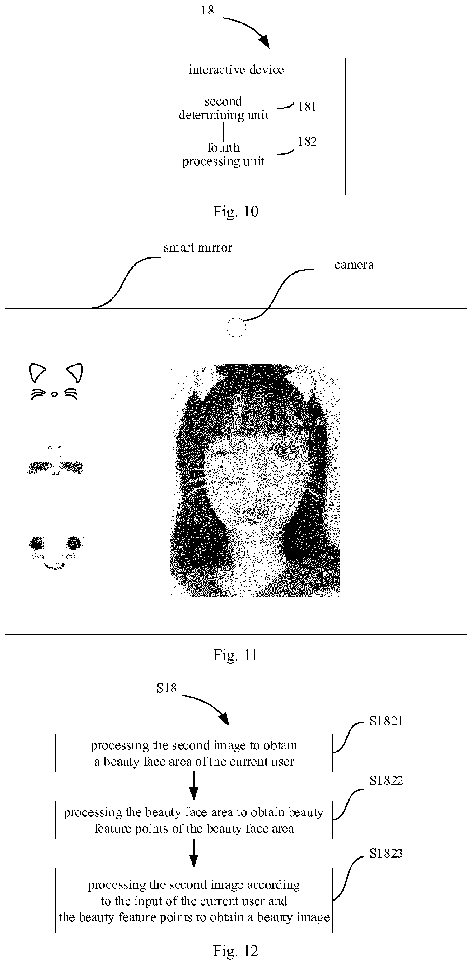

Referring to Figs. 5 and 10 together, in some embodiments, the interactive device 18 comprises a second determining unit 181 and a fourth processing unit 182. Step S1811 may be implemented by the first processing unit 141, step S1812 may be implemented by the second processing unit 142, step S1813 may be implemented by the second determining unit 181, and step S1814 may be implemented by the fourth processing unit 182.

That is, the first processing unit 141 is further configured to process the second image to obtain the cuteness face area of the current user. The second processing unit 142 is further configured to process the cuteness face area to obtain the cuteness feature points of the cuteness face area. The second determining unit 181 is configured to determine the cuteness material according to the input of the current user. The fourth processing unit 182 is configured to match and fuse the cuteness material with the second image according to the cuteness feature points to obtain a cuteness image.

Referring to Fig. 11, specifically, cuteness feature points comprise eyes, nose, mouth, ears, hair, etc. Cuteness processing is the overlay of decorative effects on the current user's cuteness face area according to the detected cuteness feature points, such as the overlay of cute expressions on the face, the overlay of hair clips and other virtual decorations on the head, the overlay of animal ears on the head, the overlay of animal nose on the nose and the overlay of animal beard on the cheek. Cuteness material can be specified by the user. After obtaining the cuteness image, the smart mirror 100 offers a highly interesting animation effect by dynamically displaying the cuteness image frame by frame.

Referring to Fig. 12, in some embodiments, the interaction comprises a beauty processing on the second image. Step S18 of controlling the smart mirror 100 to generate interaction with the current user and output interactive information according to the input of the current user comprises:
S1821, processing the second image to obtain a beauty face area of the current user;
S1822, processing the beauty face area to obtain beauty feature points of the beauty face area; and
S1823, performing beauty processing on the second image according to the input of the current user and the beauty feature points to obtain a beauty image.

Referring to Figs. 5 and 10 again, in some embodiments, the interactive device 18 comprises the fourth processing unit 182. Step S1821 may be implemented by the first processing unit 141, step S1822 may be implemented by the second processing unit 142, and step S1823 may be implemented by the fourth processing unit 182.

That is, the first processing unit 141 is further configured to process the second image to obtain the beauty face area of the current user; the second processing unit 142 is further configured to process the beauty face area to obtain the beauty feature points of the beauty face area; the fourth processing unit 182 is configured to perform beauty processing on the second image according to the input of the current user and the beauty feature points to obtain the beauty image.

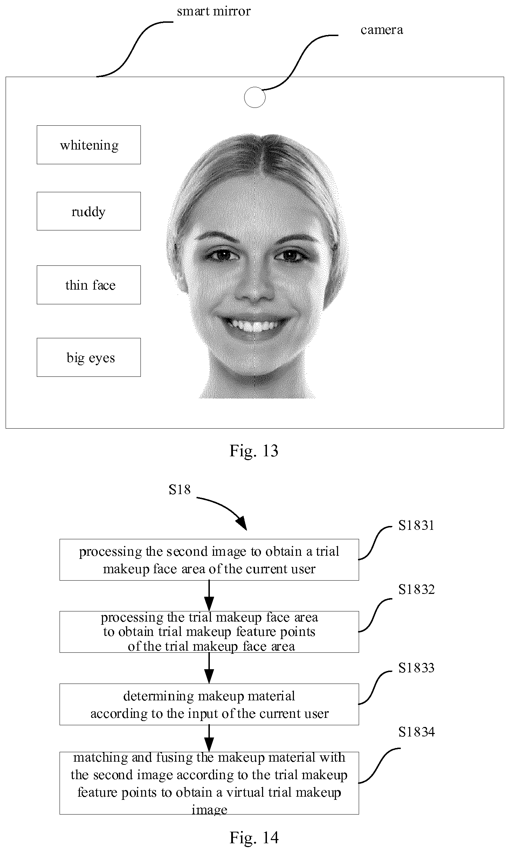

The beauty processing comprises one or more of whitening filter, ruddy filter, thin face module and big eyes module. The beauty feature points comprise the face, eyes and so on. The user can realize the beauty processing on the second image by clicking the operation option of beauty processing. For instance, as illustrated in Fig. 13, after the user clicks on the whitening filter, the fourth processing unit 182 will perform face whitening processing on the beauty face area of the second image. In this way, the user can independently select the beauty function to perform beauty processing on the second image, and the processed beauty image will be displayed on the smart mirror 100. The user can see his personal image displayed in the smart mirror 100, improving visual experience of the user.

Further, the smart mirror 20 displays the beauty image dynamically frame by frame. That is, the camera 20 captures the current user in real time to obtain the current user's beauty feature points, and performs beauty processing on the image captured in real time. In this way, even if the current user is in motion, for example, rotates his head with a certain angle, the beauty image of the current user would be displayed in real time in the smart mirror 100.

Referring to Fig. 14, in some embodiments, the interaction comprises a virtual trial makeup processing on the second image. The smart mirror comprises a makeup material library. Step S18 of controlling the smart mirror 100 to generate interaction with the current user and output interactive information according to the input of the current user comprises:
S1831, processing the second image to obtain a trial makeup face area of the current user;
S1832: processing the trial makeup face area to obtain trial makeup feature points of the trail makeup face area;
S1833, determining makeup material according to the input of the current user; and
S1834, matching and fusing the makeup material with the second image according to the trial makeup feature points to obtain a virtual trial makeup image.

Referring to Figs. 5 and 10 again, in some embodiments, the interactive device 18 comprises the second determining unit 181 and the fourth processing unit 182. Step S1831 may be implemented by the first processing unit 141, step S1832 may be implemented by the second processing unit 142, step S1833 may be implemented by the second determining unit 181, and step S1834 may be implemented by the fourth processing unit 184.

That is, the first processing unit 141 is further configured to process the second image to obtain the trial makeup face area of the current user; the second processing unit 142 is further configured to process the trial makeup face area to obtain the trial makeup feature points of the trial makeup face area; the second determining unit 181 is configured to determine the makeup material according to the input of the current user; the fourth processing unit 182 is configured to match and fuse the makeup material with the second image according to the trial makeup feature points to obtain the virtual trial makeup image.

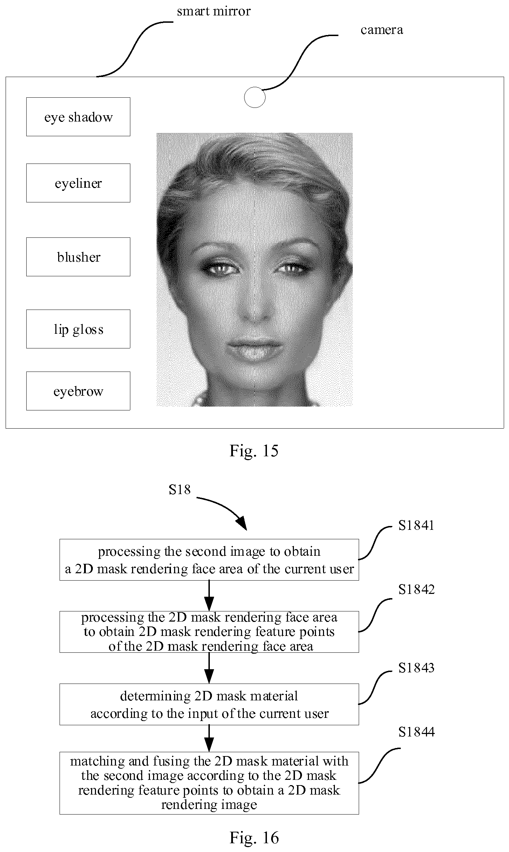

The makeup material comprises one or more of eye shadow material, eyeliner material, blusher material, lip gloss material and eyebrow material. The trail makeup feature points comprise eyes, nose, eyebrows, cheeks and other feature points. After the current user selects the corresponding makeup material in the operation interface of the smart mirror 100, the fourth processing unit 182 matches and fuses the makeup material selected by the current user with the second image according to the determined trial makeup feature points. The smart mirror 100 will display the virtual trial makeup image obtained after matching and fusing processing. For instance, as illustrated in Fig. 15, after the current user clicks on the eyeshadow material and lip gloss material, the smart mirror 100 will display the processed virtual trial makeup image. In practical use, when the current user is putting on makeup, she can determine the makeup she likes by making reference to the virtual trial makeup image displayed in the smart mirror 100. In this way, the interaction between the user and the smart mirror 100 is enhanced, and the user experience is improved.

Further, the smart mirror 100 displays the virtual trial makeup image frame by frame dynamically. Even if the current user is in motion, the smart mirror 100 can still continuously display the virtual trial makeup image obtained after trial makeup processing.

Referring to Fig. 16, in some embodiments, the interaction comprises a 2D mask rendering on the second image. The smart mirror 100 comprises a 2D mask material library. Step S18 of controlling the smart mirror 100 to generate interaction with the current user and output interactive information according to the input of the current user comprises:
S1841, processing the second image to obtain a 2D mask rendering face area of the current user;
S1842, processing the 2D mask rendering face area to obtain 2D mask rendering feature points of the 2D mask rendering face area;
S1843, determining 2D mask material according to the input of the current user; and
S1844, matching and fusing the 2D mask material with the second image according to the 2D mask rendering feature points to obtain a 2D mask rendering image.

Referring to Figs. 5 and 10 again, in some embodiments, the interactive device 18 comprises the second determining unit 181 and the fourth processing unit 182. Step S1841 may be implemented by the first processing unit 141, step S1842 may be implemented by the second processing unit 142, step S1843 may be implemented by the second determining unit 181, and step S1844 may be implemented by the fourth processing unit 184.

That is, the first processing unit 141 is further configured to process the second image to obtain the 2D mask rendering face area of the current user; the second processing unit 142 is further configured to process the 2D mask rendering face area to obtain the 2D mask rendering feature points of the 2D mask rendering face area; the second determining unit 181 is configured to determine the 2D mask material according to the input of the current user; the fourth processing unit 182 is configured to match and fuse the 2D mask material with the second image according to the 2D mask rendering feature points to obtain the 2D mask rendering image.

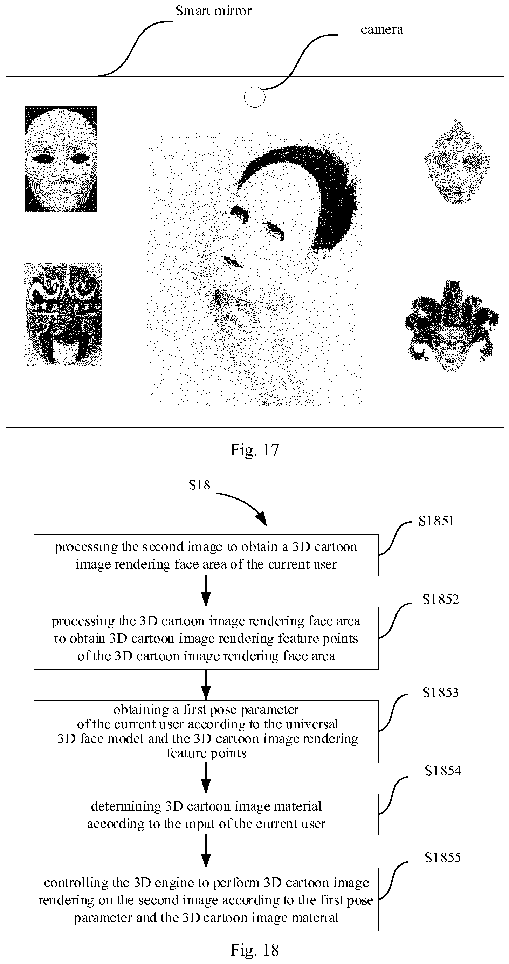

Specifically, the 2D mask rendering feature points mainly comprise eyes, nose and mouth. The 2D mask material comprises a classic white mask, a Peking Opera mask, an animal mask, a cartoon image mask, etc. After the current user selects the 2D mask material, the fourth processing unit 182 matches and fuses the 2D mask material with the second image. The smart mirror 100 will display the 2D mask rendering image after matching and fusing. As illustrated in Fig. 17, the user clicks on the 2D mask material of the white mask, and the smart mirror 100 displays the processed 2D mask rendering image. In this way, the user can feel intuitively the effect of wearing a mask, increasing the delights of using the smart mirror 100.

Further, the smart mirror 100 displays the 2D mask rendering image frame by frame dynamically. Even if the head of the current user is in motion, the smart mirror 100 can still match the 2D mask rendering face area. The user can view the rendering effect dynamically. The smart mirror 100 can provide the user with the feeling same as looking into the mirror with actually wearing a mask.

Referring to Fig. 18, in some embodiments, the interaction comprises a 3D cartoon image rendering on the second image. The smart mirror 100 comprises a 3D engine, a universal 3D face model and a 3D cartoon image material library. Step S18 of controlling the smart mirror 100 to generate interaction with the current user and output interactive information according to the input of the current user comprises:
S1851, processing the second image to obtain a 3D cartoon image rendering face area of the current user;
S1852, processing the 3D cartoon image rendering face area to obtain 3D cartoon image rendering feature points of the 3D cartoon image rendering face area;
S1853, obtaining a first pose parameter of the current user according to the universal 3D face model and the 3D cartoon image rendering feature points;
S1854, determining 3D cartoon image material according to the input of the current user; and
S1855, controlling the 3D engine to perform 3D cartoon image rendering on the second image according to the first pose parameter and the 3D cartoon image material.

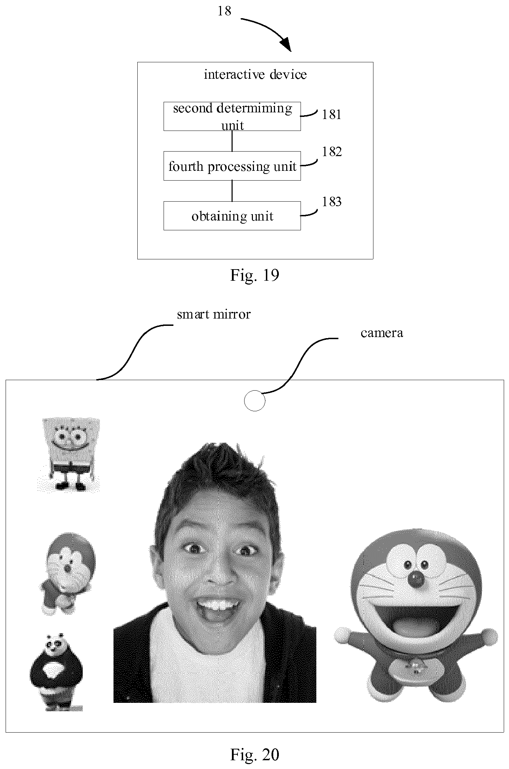

Referring to Figs. 5 and 19 together, in some embodiments, the interactive device 18 comprises an obtaining unit 183, the second determining unit 181 and the fourth processing unit 182. Step S1851 may be implemented by the first processing unit 141, step S1852 may be implemented by the second processing unit 142, step S1853 may be implemented by the obtaining unit 183, step S1854 may be implemented by the second determining unit 181, and step S1855 may be implemented by the fourth processing unit 184.

That is, the first processing unit 141 is further configured to process the second image to obtain the 3D cartoon image rendering face area of the current user; the second processing unit142 is further configured to process the 3D cartoon image rendering face area to obtain the 3D cartoon image rendering feature points of the 3D cartoon image rendering face area; the obtaining unit 183 is configured to obtain the first pose parameter of the current user according to the universal 3D face model and the 3D cartoon image rendering feature points; the second determining unit 181 is configured to determine the 3D cartoon image material according to the input of the current user; the fourth processing unit 182 is configured to control the 3D engine to perform 3D cartoon image rendering on the second image according to the first pose parameter and the 3D cartoon image material.

Specifically, performing 3D cartoon image rendering on the second image refers to acquiring the action of the character in the second image and controlling the 3D cartoon image to imitate and follow the action of the character. The 3D cartoon image material library comprises a variety of 3D cartoon image materials, such as spongebob squall, jingle cat, kung fu panda, winnie the pooh and so on. The 3D cartoon image rendering feature points comprise the eyes, nose, mouth, head and others of the 3D cartoon image rendering face area. The first pose parameter comprises head deflection angle, eye closing, mouth movement, etc. The matching between the universal 3D face model and 3D cartoon image rendering feature points is configured to convert the 2D plane image captured by the camera 20 into the 3D pose parameter, namely the first pose parameter. In this way, after the current user clicks on the 3D cartoon image material, the 3D engine can execute 3D cartoon image rendering on the second image according to the first pose parameter and the 3D cartoon image material, so as to realize the 3D display effect of the 3D cartoon image according to the current user's head and facial movements. As illustrated in Fig. 20, the 3D cartoon image material selected by the current user is jingle cat. When the user opens his eyes and laughs, the jingle cat opens its eyes and laughs simultaneously to realize real-time imitation and follow. In this way, the interaction between the user and the smart mirror 100 is much more interesting.

In some embodiments, the obtained 3D cartoon image rendering feature points can also be matched with a universal 3D face model in the universal 3D face model library to obtain 3D pose parameters, in which, the universal 3D face model library stores universal 3D faces with different shapes. In this way, different universal 3D face models can be selected for matching according to the differences of various users' heads, faces, facial features, etc., so as to improve the accuracy of 3D pose parameters and further optimize the rendering effect of 3D cartoon images, making the imitation and follow of 3D cartoon images more accurate.

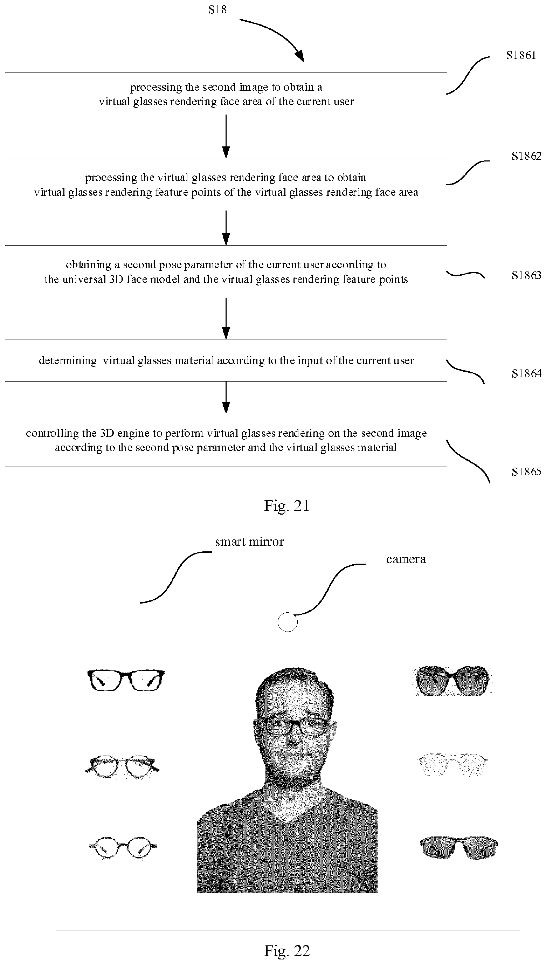

Referring to Fig. 21, in some embodiments, the interaction comprises a virtual glasses rendering on the second image. The smart mirror 100 comprises a 3D engine, a universal 3D face model and a virtual glasses material library. Step S18 of controlling the smart mirror 100 to generate interaction with the current user and output interactive information according to the input of the current user comprises:
S1861, processing the second image to obtain a virtual glasses rendering face area of the current user;
S1862, processing the virtual glasses rendering face area to obtain virtual glasses rendering feature points of the virtual glasses rendering face area;
51863, obtaining a virtual glasses rendering pose parameter of the current user according to the universal 3D face model and the virtual glasses rendering feature points;
S1864, determining virtual glasses material according to the input of the current user; and
S1655, controlling the 3D engine to perform virtual glasses rendering on the second image according to the second pose parameter and the virtual glasses material.

Referring to Figs. 5 and 19 again, in some embodiments, the interactive device 18 comprises the obtaining unit 183, the second determining unit 181 and the fourth processing unit 182. Step S1861 may be implemented by the first processing unit 141, step S1862 may be implemented by the second processing unit 142, step S1863 may be implemented by the obtaining unit 183, step S1864 may be implemented by the second determining unit 181, and step S1865 may be implemented by the fourth processing unit 182.

That is, the first processing unit 141 is further configured to process the second image to obtain the virtual glasses rendering face area of the current user; the second processing unit 142 is further configured to process the virtual glasses rendering face area to obtain the virtual glasses rendering feature points of the virtual glasses rendering face area; the obtaining unit 183 is configured to obtain the virtual glasses rendering pose parameter of the current user according to the universal 3D face model and the virtual glasses rendering feature points; the second determining unit 181 is configured to determine the virtual glasses material according to the input of the current user; the fourth processing unit 182 is configured to control the 3D engine to perform virtual glasses rendering on the second image according to the second pose parameter and the virtual glasses material.
Specifically, performing virtual glasses rendering on the second image refers to putting on virtual glasses for the character in the second image. The virtual glasses can move with the head of the character in the second image to achieve imitation and follow. The virtual glasses material library comprises a variety of virtual glasses material with different colors and shapes. The virtual glasses rendering feature points mainly comprise the head and eyes of the virtual glasses rendering face area. The virtual glasses rendering pose parameter comprises head and eyes' movement. The matching between the universal 3D face model and the virtual glasses rendering feature points is used to convert the 2D plane image captured by the camera 20 into 3D pose parameter, namely the second pose parameter. In this way, after the current user clicks on the virtual glasses material, the 3D engine can perform the virtual glasses rendering on the second image according to the second pose parameter and the virtual glasses material. Then, the current user can see the 3D display effect of wearing glasses in the smart mirror 100. When the head and eyes of the current user move, the virtual glasses can also move in real time with the movement of the head, thus realizing the accurate matching between the virtual glasses and the eyes. As illustrated in Fig. 22, the virtual glasses material selected by the user is black-rimmed glasses, and the smart mirror 100 displays the image of the user wearing the black-rimmed glasses. When the user's head rotates, the black-rimmed glasses also match the user's eyes exactly. In this way, the user can choose an appropriate style of glasses for wearing by making reference to the effect of virtual glasses rendering, further increasing the use function and practicality of the smart mirror 100. Moreover, the delight of using the smart mirror 100 can also be improved.

In some embodiments, the obtained virtual glasses rendering features can also be matched with a universal 3D face model in the universal 3D face model library to obtain the 3D pose parameter, in which, the universal 3D face model library stores universal 3D faces with different shapes. In this way, different universal 3D face models can be selected for matching according to the differences of various users' heads, faces, facial features, etc., so as to improve the accuracy of 3D pose parameters and further optimize the effect of virtual glasses rendering, making the matching between the virtual glasses and users more accurate.

Referring to Fig. 23, in some embodiments, the interaction comprises a virtual hairstyle rendering on the second image. The smart mirror 100 comprises a 3D engine, a universal 3D face model and a virtual hairstyle material library. Step S18 of controlling the smart mirror 100 to generate interaction with the current user and output interactive information according to the input of the current user comprises:
S1871, processing the second image to obtain a virtual hairstyle rendering face area of the current user;
S1872, processing the virtual hairstyle rendering face area to obtain virtual hairstyle rendering feature points of the virtual hairstyle rendering face area;
S1873, obtaining a third pose parameter of the current user according to the universal 3D face model and the virtual hairstyle rendering feature points;
S1874, determining virtual hairstyle material according to the input of the current user; and
S1875, control the 3D engine to perform virtual hairstyle rendering on the second image according to the second pose parameter and the virtual hairstyle material.

Referring to Figs. 5 and 19 again, in some embodiments, the interactive device 18 comprises the obtaining unit 183, the second determining unit 181 and the fourth processing unit 182. Step S1871 may be implemented by the first processing unit 141, step S1872 may be implemented by the second processing unit 142, step S1873 may be implemented by the obtaining unit 183, step S1874 may be implemented by the second determining unit 181, and step S1875 may be implemented by the fourth processing unit 182.

That is, the first processing unit 141 is further configured to process the second image to obtain the virtual hairstyle rendering face area of the current user; the second processing unit 142 is further configured to process the virtual hairstyle rendering face area to obtain the virtual hairstyle rendering feature points of the virtual hairstyle rendering face area; the obtaining unit 183 is configured to obtain the third pose parameter of the current user according to the universal 3D face model and the virtual hairstyle rendering feature points; the second determining unit 181 is configured to determine the virtual hairstyle material according to the input of the current user; the fourth processing unit 182 is configured to control the 3D engine to perform virtual hairstyle rendering on the second image according to the third pose parameter and the virtual hairstyle material.

Specifically, performing virtual hair rendering on the second image refers to wearing virtual hairstyle for the character in the second image. The virtual hairstyle can move with the movement of the head of the character. Virtual hair material library comprises a variety of virtual hair material with different colors and shapes. Virtual hair rendering features mainly comprise the head of the current user. Virtual hair render pose parameters comprise head movement. The matching between the universal 3D face model and the virtual hair rendering features is used to convert the 2D plane image captured by the camera 20 into 3D pose parameter, namely the third pose parameter. In this way, after the current user clicks on the virtual hair material, the 3D engine can perform the virtual hairstyle rendering on the second image according to the third pose parameter and the virtual hairstyle material. Then, the current user can see the 3D display effect of wearing the virtual hairstyle in the smart mirror 100. The virtual hairstyle can also move with the movement of the current user's head in real time, so as to realize the accurate matching between the virtual hairstyle and the head. As illustrated in Fig. 24, the virtual hairstyle material selected by the user is short hair, and the smart mirror 100 displays the image of the user wearing the short hair. When the user's head rotates, the short hair also matches the user's head exactly. In this way, the user can choose an appropriate hairstyle by making reference to the effect of virtual hairstyle rendering, further increasing the use function and practicality of the smart mirror 100.

In some embodiments, the obtained virtual hairstyle rendering feature points can also be matched with a universal 3D face model in the universal 3D face model library to obtain the 3D pose parameter, in which, the universal 3D face model library stores universal 3D faces with different shapes. In this way, different universal 3D face models can be selected for matching according to the differences of various users' heads, faces, facial features, etc., so as to improve the accuracy of 3D pose parameter and further optimize the effect of virtual glasses rendering, making the matching between the virtual hairstyle and the user's head more accurate.

Referring to Fig. 25, in some embodiments, the interaction also comprises providing daily nursing guidance for the current user. Step S18 of controlling the smart mirror 100 to generate interaction with the current user and output interactive information according to the input of the current user comprises:
S188, providing daily nursing guidance for the current user according to the input of the current user.

Referring to Fig. 26, in some embodiments, the interactive device 18 further comprises a guiding unit185. Step S188 can be implemented by the guiding unit 185.

That is, the guiding unit 185 is configured to provide daily nursing guidance for the current user according to the input of the current user.

Specifically, daily nursing guidance comprises teaching users how to brush their teeth correctly, wash their face correctly, and have facial massage, etc. As illustrated in Fig. 27, when the user clicks on the daily nursing guidance content of brushing teeth, the smart mirror 100 will display the daily nursing guidance content of brushing teeth in the form of video or picture. Thus, the practicality of the smart mirror 100 is improved.

It is to be noted that, in above embodiments, the second determining unit 181 mentioned in cuteness processing, virtual trial makeup processing, 2D mask rendering, 3D cartoon image rendering, virtual glasses rendering, and virtual hairstyle rendering is the same. That is, the second determining unit can perform steps S1813, S1833, S1843, S1854, S1865, and/or step S1874. The fourth processing unit 182 is the same mentioned in cuteness processing, beauty processing, virtual trial makeup processing, 2D mask rendering, 3D cartoon image rendering, virtual glasses rendering, and virtual hairstyle rendering. That is, the fourth processing unit 182 can perform steps S1814, S1823, S1834, S1844, S1855, S1865 and/or S1875.

In addition, the control method, the controller 10 and the smart mirror 100 of embodiments of the present disclosure can simultaneously or successively perform one or more of the cuteness processing, virtual trial makeup processing, 2D mask rendering, 3D cartoon image rendering, virtual glasses rendering, and virtual hairstyle rendering. For instance, the controller 10 can simultaneously execute cuteness processing, beauty processing and 3D cartoon image rendering on the second image. The second image can also be processed by the controller 10 in the order of beauty processing, virtual trial makeup processing, virtual glasses rendering, and virtual hairstyle rendering. In some embodiments, the processing order of respective image processing can be changed randomly.

Referring to Fig. 28, the smart mirror 100 of embodiments of the present disclosure comprises one or more processors 30, a memory 40 and one or more programs 41. The one or more programs 41 are stored in memory 40 and configured to be executed by the one or more processors 30. The program 41 comprises instructions for executing a control method according to any of the embodiments described above.

For instance, the program 41 comprises instructions to execute the following steps:
S12, controlling the camera 20 to capture the current user;
S14, determining whether the current user is a registered user;
S16, controlling the current user to log in to the smart mirror 100 when the current user is a registered user; and
S18, controlling the smart mirror 100 to generate interaction with the current user and output interactive information according to the input of the current user.

The computer readable storage medium of embodiments of the present disclosure comprises computer programs configured to be used in combination with an electronic device capable of displaying frames. The computer programs, when executed by a processor, implement the control method of any one of above embodiments.

For instance, the processor can be configured to execute the following steps:
S12, controlling the camera20 to capture the current user;
S14, determining whether the current user is a registered user;
S16, controlling the current user to log in to the smart mirror 100 when the current user is a registered user; and
S18, controlling the smart mirror 100 to generate interaction with the current user and output interactive information according to the input of the current user.

In conclusion, the control method, the controller 10, the smart mirror 100 and the computer readable storage medium of embodiments of the present disclosure can provide registered users with a variety of interactive functions, comprising cuteness processing, beauty processing, virtual trial makeup processing, 2D mask rendering, 3D cartoon image rendering, virtual glasses rendering, virtual hairstyle rendering, daily nursing guidance, and the like. In this way, the smart mirror 100 has achieved an increase in its use functions and practicability, with improvements in interestingness and the user experience.

Reference throughout this specification to "an embodiment," "some embodiments, " "an example, " "a specific example, " or "some examples, " means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

In addition, terms such as "first" and "second" are used herein for purposes of description and are not intended to indicate or imply relative importance or significance. Thus, the feature defined with "first" and "second" may comprise one or more this feature. In the description of the present disclosure, "a plurality of" means at least two, for example, two or three, unless specified otherwise.

Any process or method described in a flow chart or described herein in other ways may be understood to comprise one or more modules, segments or portions of codes of executable instructions for achieving specific logical functions or steps in the process, and the scope of a preferred embodiment of the present disclosure comprises other implementations, which should be understood by those skilled in the art.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, " the computer readable medium" may be any device adaptive for comprising, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

It would be understood by those skilled in the art that all or a part of the steps carried by the method in the above-described embodiments may be completed by relevant hardware instructed by a program. The program may be stored in a computer readable storage medium. When the program is executed, one or a combination of the steps of the method in the above-described embodiments may be completed.

In addition, individual functional units in embodiments of the present disclosure may be integrated in one processing module or may be separately physically present, or two or more units may be integrated in one module. The integrated module as described above may be achieved in the form of hardware, or may be achieved in the form of a software functional module. If the integrated module is achieved in the form of a software functional module and sold or used as a separate product, the integrated module may also be stored in a computer readable storage medium.

The storage medium mentioned above may be read-only memories, magnetic disks or CD, etc. Although explanatory embodiments have been shown and described, it would be appreciated by those skilled in the art that the above embodiments cannot be construed to limit the present disclosure, and changes, alternatives, and modifications can be made in the embodiments without departing from scope of the present disclosure.

## Claims

1. A control method, for controlling a smart mirror, the smart mirror comprising a camera, the control method comprising:
controlling the camera to capture a current user;
determining whether the current user is a registered user;
controlling the current user to log in to the smart mirror when the current user is a registered user; and
controlling the smart mirror to generate interaction with the current user and output interactive information according to an input of the current user.

2. The control method according to claim 1, wherein the smart mirror comprises a registry, the registry comprises registered feature information of registered face areas of all the registered users, the step of determining whether the current user is a registered user comprises:
processing a first image of the current user captured by the camera to obtain a face area to be tested of the current user;
processing the face area to be tested to obtain feature points to be tested of the face area to be tested;
processing the feature points to be tested to extract feature information of the face area to be tested;
comparing the feature information to be tested with the registered feature information to obtain a comparison result; and
determining that the current user is a registered user when the comparison result is greater than a predetermined threshold.

3. The control method according to claim 2, further comprising:
controlling the camera to capture a second image of the current user; and
controlling the smart mirror to display the second image.

4. The control method according to claim 3, wherein the interaction comprises cuteness processing on the second image, the smart mirror comprises a cuteness material library and the step of controlling the smart mirror to generate interaction with the current user and output interactive information according to the input of the current user comprises:
processing the second image to obtain a cuteness face area of the current user;
processing the cuteness face area to obtain cuteness feature points of the cuteness face area;
determining cuteness material according to the input of the current user; and
matching and fusing the cuteness material with the second image according to the cuteness feature points, to obtain a cuteness face image.

5. The control method according to claim 3, wherein the interaction comprises beauty processing on the second image; the step of controlling the smart mirror to generate interaction with the current user and output interactive information according to the input of the current user comprises:
processing the second image to obtain a beauty face area of the current user;
processing the beauty face area to obtain beauty feature points of the beauty face area; and
performing the beauty processing the second image according to the input of the current user and the beauty feature points to obtain a beauty image.

6. The control method according to claim 5, wherein the beauty processing comprises one or more of whitening filter, ruddy filter, thin face module and big eyes module.

7. The control method according to claim 3, wherein the interaction comprises virtual trial makeup processing on the second image, the smart mirror comprises a makeup material library, and the step of controlling the smart mirror to generate interaction with the current user and output interactive information according to the input of the current user comprises:
processing the second image to obtain a trial makeup face area of the current user;
processing the test-cosmetic face area to obtain trial makeup feature points of the trial makeup face area;
determining makeup material according to the input of the current user; and
matching and fusing the makeup material with the second image according to the trial makeup feature points, to obtain a virtual trial makeup image.

8. The control method according to claim 7, wherein the makeup material library comprises one or more of eye shadow material, eyeliner material, blusher material, lip gloss material and eyebrow material.

9. The control method according to claim 3, wherein the interaction comprises 2D mask rendering on the second image, and the smart mirror comprises a 2D mask material library; the step of controlling the smart mirror to generate interaction with the current user and output interactive information according to the input of the current user comprises:
processing the second image to obtain a 2D mask rendering face area of the current user;
processing the 2D mask rendering face area to obtain 2D mask rendering feature points of the 2D mask rendering face area;
determining 2D mask material according to the input of the current user; and
matching and fusing the 2D mask material with the second image according to the 2D mask rendering feature points to obtain a 2D mask rendering image.

10. The control method according to claim 3, wherein the interaction comprises 3D cartoon image rendering on the second image, and the smart mirror comprises a 3D engine, a universal 3D face model and a 3D cartoon image material library; the step of controlling the smart mirror to generate interaction with the current user and output interactive information according to the input of the current user comprises:
processing the second image to obtain a 3D cartoon image rendering face area of the current user;
processing the 3D cartoon image rendering face area to obtain 3D cartoon image rendering feature points of the 3D cartoon image rendering face area;
obtaining a first pose parameter of the current user according to the universal 3D face model and the 3D cartoon image rendering feature points;
determining 3D cartoon image material according to the input of the current user; and
controlling the 3D engine to perform 3D cartoon image rendering on the second image according to the first pose parameter and the 3D cartoon image material.

11. The control method according to claim 3, wherein the interaction comprises virtual glasses rendering on the second image, and the smart mirror comprises a 3D engine, a universal 3D face model and a virtual glasses material library; the step of controlling the smart mirror to generate interaction with the current user and output interactive information according to the input of the current user comprises:
processing the second image to obtain a virtual glasses rendering face area of the current user;
processing the virtual glasses rendering face area to obtain virtual glasses rendering feature points of the virtual glasses rendering face area;
obtaining a second pose parameter of the current user according to the universal 3D face model and the virtual glasses rendering feature points;
determining virtual glasses material according to the input of the current user; and
controlling the 3D engine to perform virtual glasses rendering on the second image according to the second pose parameter and the virtual glasses material.

12. The control method according to claim 3, wherein the interaction comprises virtual hairstyle rendering on the second image, and the smart mirror comprises a 3D engine, a universal 3D face model and a virtual hairstyle material library; the step of controlling the smart mirror to generate interaction with the current user and output interactive information according to the input of the current user comprises:
processing the second image to obtain a virtual hairstyle rendering face area of the current user;
processing the virtual hairstyle rendering face area to obtain virtual hairstyle rendering feature points of the virtual hairstyle rendering face area;
obtaining a third pose parameter of the current user according to the universal 3D face model and the virtual hairstyle rendering feature points;
determining virtual hairstyle material according to the input of the current user; and
controlling the 3D engine to perform virtual hairstyle rendering on the second image according to the third pose parameter and the virtual hairstyle material.

13. The control method according to claim 1, wherein the interaction comprises providing daily nursing guidance for the current user; the step of controlling the smart mirror to generate interaction with the current user and output interactive information according to the input of the current user comprises:
providing daily nursing guidance for the current user according to the input of the current user.

14. The control method according to claim 1, further comprising:
controlling the camera to capture the registered user; and
establishing a personal record file for the registered user according to an input of the registered user.

15. A controller, for controlling a smart mirror, the smart mirror comprising a camera, and the controller comprising:
a control device, configured to control the camera to capture a current user;
a determining device, configured to determine whether the current user is a registered user;
a login device, configured to control the current user to log in to the smart mirror when the current user is a registered user;
an interactive device, configured to control the smart mirror to generate interaction with the current user and output interactive information according to an input of the current user.

16. The controller according to claim 15, wherein, the smart mirror comprises a registry; the registry comprises registered feature information of registered face areas of all the registered users; the determining device comprises:
a first processing unit, configured to process a first image of the current user captured by the camera to obtain a face area to be tested of the current user;
a second processing unit, configured to process the face area to be tested to obtain feature points to be tested of the face area to be tested;
a third processing unit, configured to process the feature points to be tested to extract the feature information of the face area to be tested;
a comparing unit, configured to compare the feature information to be tested with the registered feature information to obtain a comparison result; and
a first determining unit, configured to determine that the current user is a registered user when the comparison result is greater than a predetermined threshold.

17. The controller according to claim 16, wherein the control device is further configured to:
control the camera to capture a second image of the current user; and
control the smart mirror to display the second image.

18. The controller according to claim 17, wherein the interaction comprises cuteness processing on the second image, and the smart mirror comprises a cuteness material library;
the first processing unit is further configured to process the second image to obtain a cuteness face area of the current user;
the second processing unit is further configured to process the cuteness face area to obtain cuteness feature points of the cuteness face area;
the interactive device comprises:
a second determining unit, configured to determine cuteness material according to the input of the current user; and
a fourth processing unit, configured to match and fuse the cuteness material with the second image according to the cuteness feature points to obtain a cuteness face image.

19. The controller according to claim 17, wherein the interaction comprises beauty processing on the second image;
the first processing unit is further configured to process the second image to obtain a beauty face area of the current user;
the second processing unit is further configured to process the beauty face area to obtain beauty feature points of the beauty face area;
the interactive device comprises:
a fourth processing unit, configured to process the second image according to the input of the current user and the beauty feature points to obtain a beauty image.

20. The controller according to claim 19, wherein the beauty processing comprises one or more of whitening filter, ruddy filter, thin face module and big eyes module.

21. The controller according to claim 17, wherein the interaction comprises virtual trial makeup processing on the second image, and the smart mirror comprises a makeup material library;
the first processing unit is further configured to process the second image to obtain a trial makeup face area of the current user;
the second processing unit is further configured to process the trial makeup face area to obtain trial makeup feature points of the trial makeup face area;
the interactive device comprises:
a second determining unit, configured to determine makeup material according to the input of the current user; and
a fourth processing unit, configured to match and fuse the makeup material with the second image according to the trial makeup feature points to obtain a virtual trial makeup image.

22. The controller according to claim 21, wherein the makeup material library comprises one or more of eye shadow material, eyeliner material, blusher material, lip gloss material and eyebrow material.

23. The controller according to claim 17, wherein the interaction comprises 2D mask rendering on the second image, and the smart mirror comprises a 2D mask material library;
the first processing unit is further configured to process the second image to obtain a 2D mask rendering face area of the current user;
the second processing unit is further configured to process the 2D mask rendering face area to obtain 2D mask rendering feature points of the 2D mask rendering face area;
the interactive device comprises:
a second determining unit, configured to determine 2D mask material according to the input of the current user; and
a fourth processing unit, configured to match and fuse the 2D mask material with the second image according to the 2D mask rendering feature points to obtain a 2D mask rendering image.

24. The controller according to claim 17, wherein the interaction comprises 3D cartoon image rendering on the second image, and the smart mirror comprises a 3D engine, a universal 3D face model and a 3D cartoon image material library;
the first processing unit is further configured to process the second image to obtain a 3D cartoon image rendering face area of the current user;
the second processing unit is further configured to process the 3D cartoon image rendering face area to obtain 3D cartoon image rendering feature points of the 3D cartoon image rendering face area;
the interactive device comprises:
an obtaining unit, configured to obtain a first pose parameter of the current user according to the universal 3D face model and the 3D cartoon image rendering feature points;
a second determining unit, configured to determine 3D cartoon image material according to the input of the current user; and
a fourth processing unit, configured to control the 3D engine to perform 3D cartoon image rendering on the second image according to the first pose parameter and the 3D cartoon image material.

25. The controller according to claim 17, wherein the interaction comprises virtual glasses rendering on the second image, and the smart mirror comprises a 3D engine, a universal 3D face model and a virtual glasses material library;
the first processing unit is further configured to process the second image to obtain a virtual glasses rendering face area of the current user;
the second processing unit is further configured to process the virtual glasses rendering face area to obtain virtual glasses rendering feature points of the virtual glasses rendering face area;
the interactive device comprises:
an obtaining unit, configured to obtain a second pose parameter of the current user according to the universal 3D face model and the virtual glasses rendering feature points;
a second determining unit, configured to determine virtual glasses material according to the input of the user; and
a fourth processing unit, configured to control the 3D engine to perform virtual glasses rendering on the second image according to the second pose parameter and the virtual glasses material.

26. The controller according to claim 17, wherein the interaction comprises virtual hairstyle rendering on the second image, and the smart mirror comprises a 3D engine, a universal 3D face model and a virtual hairstyle material library;
the first processing unit is further configured to process the second image to obtain a virtual hairstyle rendering face area of the current user;
the second processing unit is further configured to process the virtual hairstyle rendering face area to obtain virtual hairstyle rendering feature points of the virtual hairstyle rendering face area;
the interactive device comprises:
an obtaining unit, configured to obtain a third pose parameter of the current user according to the universal 3D face model and the virtual hairstyle rendering feature points;
a second determining unit, configured to determine virtual hairstyle material according to the input of the current user; and
a fourth processing unit, configured to control the 3D engine to perform virtual hair rendering on the second image according to the third pose parameter and the virtual hairstyle material.

27. The controller according to claim 15, wherein the interaction comprises providing daily nursing guidance for the current user;
the interactive device comprises:
a guiding unit, configured to provide daily nursing guidance for the current user according to the input of the current user.

28. The controller according to claim 15, wherein
the control device is further configured to control the camera to capture the registered user; and
the controller further comprises a establishing device, configured to establish a personal record file for the registered user according to the input of the registered user.

29. A smart mirror, comprising:
a camera; and
a controller according to any one of claim 15 to 28, electrically connected with the camera.

30. A smart mirror, comprising:
one or more processors;
a memory; and
one or more programs, stored in the memory and configured to be executed by the one or more processors, and comprising instructions for executing the control method of any of claim 1 to 14.

31. A computer readable storage medium, comprising a computer program configured to be used in combination with an electronic device capable of displaying frames, wherein the computer program is executable by a processor to implement the control method according to any one of claims 1 to 14.
